# EUROPÄISCHE PATENTSCHRIFT

(11) **EP 1 508 425 B1**
(45) Veröffentlichungstag und Bekanntmachung des Hinweises auf die Patenterteilung: **27.03.2013**
(21) Anmeldenummer: 04013077.5
(22) Anmeldetag: 03.06.2004
(51) Int. Cl.: B29C 47/90, B29C 47/08

(54) **Vorrichtung zur Herstellung von Kunststoffrohren**
Apparatus for producing plastic pipes
Dispositif pour la production de tubes en matière plastique

(30) Priorität: 19.08.2003 DE 10337964
(43) Veröffentlichungstag der Anmeldung: 23.02.2005
(73) Patentinhaber: Egeplast Werner Strumann GmbH & Co. KG, 48268 Greven (DE)
(72) Erfinder: Ulrich, Herbert, 48282 Emsdetten (DE)
(74) Vertreter: Fritz & Brandenburg Patentanwälte

(56) Entgegenhaltungen:
- EP-A- 1 115 550
- CH-A- 689 715
- US-A- 4 154 081
- US-A- 5 132 062

## Beschreibung

Die Erfindung bezieht sich auf eine Vorrichtung zur Herstellung von Kunststoffrohren gemäß dem Oberbegriff des Anspruchs 1.

Aus der EP 1 115 550 B1 ist eine Anordnung, d. h. eine Vorrichtung gemäß dem Oberbegriff des Anspruchs 1 und ein Verfahren zur Herstellung von Kunststoffrohren bekannt geworden, das ein Extrusionssystem aufweist, bei dem im laufenden Betrieb der Rohrdurchmesser verändert werden kann. Durch den Einsatz dieser Extrusionslinie wird die Produktivität erhöht, der Personalaufwand reduziert und Produktionsabfälle reduziert, wobei weiterhin kurze Lieferzeiten ohne aufwendige Lagerhaltung erreichbar sind.

Hierbei sind Düse und Dorn des Rohrkopfes konisch ausgebildet. Durch die Veränderung der axialen Position des Dornes können sowohl die Wanddicke als auch der Durchmesser des extrudierten Rohres exakt eingestellt werden.

In einer an sich an den Rohrkopf anschließenden Vakuum-Saugglocke, in der Meßvorrichtungen vorgesehen sind, die in Abhängigkeit des gewünschten Rohraußendurchmessers das in der Saugglocke herrschende Vakuum einstellen, wird der rohrförmige Schmelzestrang auf den gewünschten Außendurchmesser eingestellt, d. h. aufgesaugt. Hieran schließt sich eine Kalibrierkammer an, in der das genaue Kalibrieren des Außendurchmessers des Schmelzestranges und des schon teilweise ausgehärteten Rohres erfolgt. Das so genau kalibrierte Rohr wird in ein Vakuum-Kalibrierbad geführt, das mit einer sich anpassenden Endabdichtung ausgerüstet ist.

Aus dem DE 298 22 651 U1 ist eine Kühl- und Kalibriervorrichtung für extrudierte Kunststoffprofile bekanntgeworden, vorzugsweise Fensterprofile, bei der im Bodenbereich eines Kalibriertankes eine oder mehrere Zentrierwellen vorgesehen sind. Hierdurch ist es möglich, nach Herausziehen der Zentrierwelle die Kalibrierwerkzeuge in einfachster Weise auszuwechseln. Eine Auswechslung während der Produktionsphase erfolgt hierbei nicht.

Auch ist es aus der DE 40 33 441 C2 bekannt geworden, Kalibrier- und Kühlvorrichtungen für extrudierte Rohre aus Kunststoff klappbar auszubilden, aber auch hier erfolgt keine Auswechslung der Kalibrierhülse während der Produktionsphase des Rohres.

Die EP-A-1 115 550 beschreibt eine Vorrichtung mit den Merkmalen des Oberbegriffs des Anspruchs 1. Bei dieser bekannten Vorrichtung sind jedoch die Kalibrierkammer und das sich anschließende Vakuum-Kalibrierbad nicht verfahrbar.

Die US-A-5 132 062 beschreibt eine Möglichkeit bei einer Extrusionsanlage während des laufenden Extrusionsverfahrens zu Wartungszwecken Kalibrierhülsen auszutauschen, indem Kalibrierhülsen mit Kühlvorrichtung verwendet werden, die jeweils aus zwei gelenkig miteinander verbundenen Halbschalen bestehen, die um das zu kalibrierende Rohr gelegt und durch Zuklappen geschlossen werden können.

Aus der US 2001/0018078 A ist es grundsätzlich bekannt, bei einer Vorrichtung zur Herstellung von Kunststoffprofilen die Kalibrierkammer und ein sich anschließendes Vakuum-Kalibrierbad verfahrbar zu lagern, so dass der gesamte Kalibriertisch in Extrusionsrichtung auf das Extrusionswerkzeug zu und von diesem weg verfahren werden kann.

Die Aufgabe der vorliegenden Erfindung besteht darin, bei einer Vorrichtung zur Herstellung von Kunststoffrohren der eingangs genannten Gattung die Zugänglichkeit der Kalibrierkammer zum Einsetzen unterschiedlicher Kalibrierhülsen zu verbessern und während des Betriebes der Extrusionslinie ohne Unterbrechung und Durchtrennung des extrudierten Rohres ein automatisiertes Wechseln der Kalibrierhülse zu ermöglichen.

Die Lösung dieser Aufgabe ergibt sich durch eine Vorrichtung zur Herstellung von Kunststoffrohren mit den Merkmalen des Anspruchs 1. Erfindungsgemäß wird vorgeschlagen, die Zugänglichkeit der Kalibrierkammer zum Einsetzen unterschiedlicher Kalibrierhülsen dadurch zu verbessern, dass die Kalibrierkammer und ein sich anschließendes Vakuum-Kalibrierbad verfahrbar gelagert sind. Weiterhin wird vorgeschlagen, geteilte Kalibrierhülsen einzusetzen, die das Rohr umgreifen und für das Wechseln der Kalibrierhülse einen Greiferarm vorzusehen.

Die Extrusionslinie kann im Schleichgang betrieben werden und während des Betriebes der Extrusionslinie kann ohne Unterbrechung und Durchtrennung des extrudierten Rohres ein Wechseln der Kalibrierhülse in der Kalibrierkammer erfolgen. Hierbei umgreift die Kalibrierhülse das Rohr und hierzu werden geteilte Kalibrierhülsen eingesetzt.

Bevorzugte Weiterbildungen der Vorrichtung werden in den Ansprüchen 2 bis 9 erläutert.

Ein Ausführungsbeispiel der Erfindung wird nachfolgend anhand der Zeichnungen erläutert. Die Zeichnungen zeigen dabei in
- Fig. 1: eine Extrusionsanlage gemäß der Erfindung, in
- Fig. 2: in größerem Maßstab die eigentliche Greifeinrichtung für die auszuwechselnde Kalibrierhülse und in

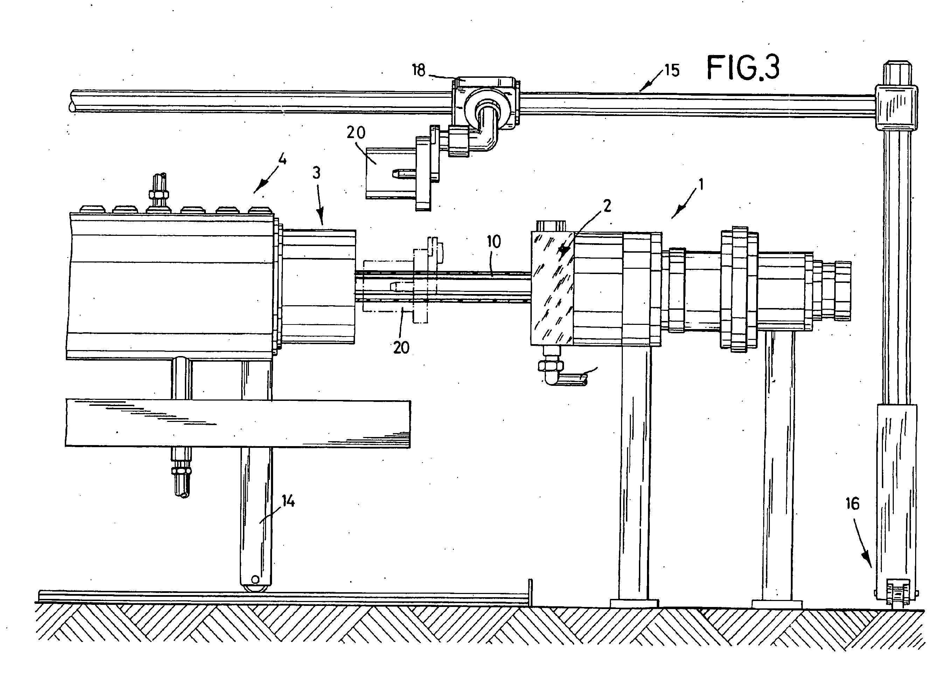

- Fig. 3: den Betriebszustand während des Auswechselns , der Kalibrierhülse.

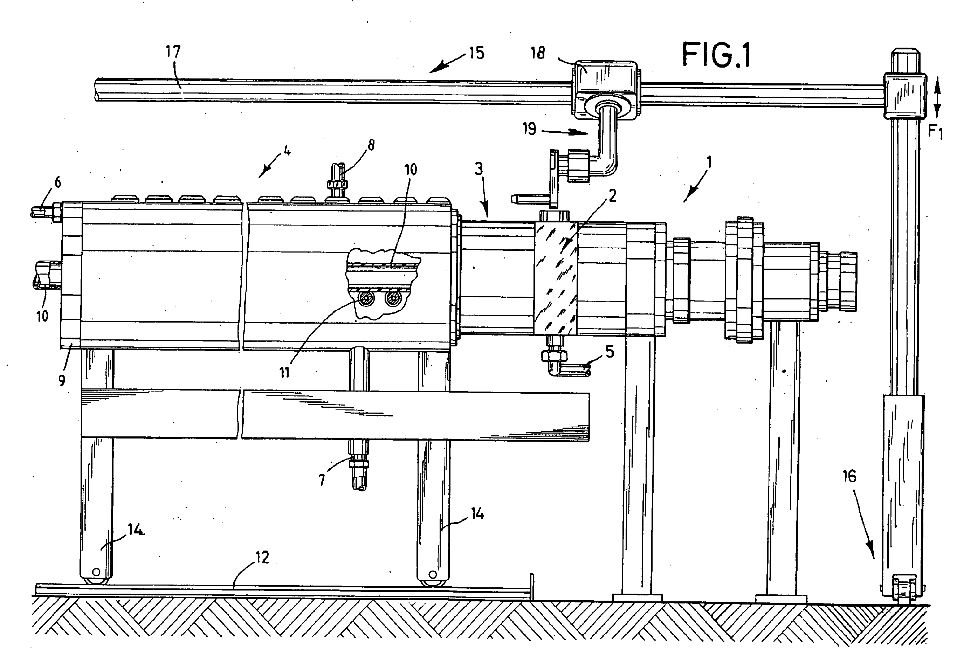

In Fig. 1 ist ein verstellbarer Rohrkopf 1 erkennbar, der in Produktionsrichtung gesehen an einen in der Zeichnung nicht dargestellten Extruder anschließt. An den verstellbaren Rohrkopf 1 schließt sich eine Vakuum-Saugglocke 2 an, die mit einem Vakuumanschluß 5 ausgerüstet ist, in der Meßvorrichtungen vorgesehen sind, die in Abhängigkeit des gewünschten Rohraußendurchmessers, das in der Saugglocke herrschende Vakuum einstellen, so daß dadurch der rohrförmige Schmelzestrom auf den gewünschten Außendurchmesser eingestellt wird, d. h. aufgesaugt wird, wobei in der Vakuum-Saugglocke 2 bereits eine Vorkühlung des Schmelzestranges erfolgen kann. In der Vakuum-Saugglocke 2 kann in Verbindung mit dem verstellbaren Rohrkopf eine genaue Rohrwanddicke eingestellt werden, wobei die Rohrwanddicke in Abhängigkeit des Außendurchmessers des Rohres variiert werden kann.

An die Vakuum-Saugglocke 2 schließt sich eine Kalibrierkammer 3 an. Hier erfolgt ein genaues Kalibrieren des Außendurchmessers des Schmelzestranges und des schon teilweise ausgehärteten Rohres.

In einem sich in Produktionsrichtung gesehen daran anschließenden Vakuum-Kalibrierbad 4 erfolgt dann das Auskühlen und Aushärten des Kunststoffrohres durch Sprühwasser, wobei in der Zeichnung ein Wasserzulauf 6 und ein Wasserabfluß 7 erkennbar ist. Weiterhin schließt an das Vakuum-Kalibrierbad 4 ein Vakuumanschluß 8 an und das sich in dem Vakuum-Kalibrierbad 4 befindende Rohr 10 läuft über Stützrollen 11, die auch als Kalibrierrollen bezeichnet werden können und sich auf den gewünschten Rohrdurchmesser einstellen lassen. Die Oberfläche des Rohres 10 ist relativ hart und das Rohr 10 verläßt das Vakuum-Kalibrierbad 4 durch eine Vakuumabdichtung 9, die sich entweder selbständig auf den Rohrdurchmesser einstellt oder in Abhängigkeit der eingestellten Rohrdimensionen eingestellt wird. In der Vakuumabdichtung 9 können Formrollen angeordnet sein, die hydraulisch oder durch mechanische Federn betätigt werden, wobei gleichzeitig hier in den Durchlauf des Rohres Wasser zur Schmierung und Abdichtung eingeführt werden kann.

In Fig. 1 ist weiterhin erkennbar, daß das eigentliche Vakuum-Kalibrierbad 4 zusammen mit der Kalibrierkammer 3 beispielsweise auf einem Gleis 12 über mit Rollen ausgerüsteten Ständern 14 verfahren werden kann, so daß eine Trennung der Extrusionslinie im Bereich zwischen der Kalibrierkammer 3 und der Vakuumkammer 2 erfolgen kann.

Eine Hubanlage 15 ist ebenfalls verfahrbar über Rollstützen 16 vorgesehen und kann seitlich oder oberhalb der Extrusionslinie eingestellt werden. Diese Hubanlage 15 weist zum Beispiel einen Träger 17 auf, an den ein Anschlußstück 18 anschließt, das mit einem Greifarm 19 ausgerüstet ist, der zum Auswechseln der auswechselbaren Kalibrierhülsen vorgesehen wird.

Der Pfeil F₁ verdeutlicht in Fig. 1 die mögliche Hubbewegung des Trägers 17.

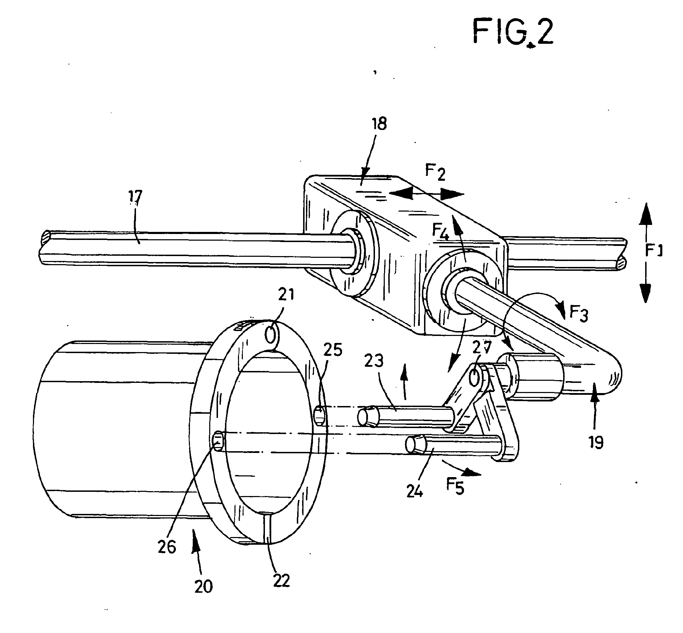

In Fig. 2 ist ein Ausführungsbeispiel für eine mögliche Greifeinrichtung dargestellt. Hierbei ist der Träger 17 erkennbar zusammen mit dem Anschlußstück 18 und dem Greifarm 19. Der Greifarm 19 trägt an seinem freien Ende Greiferstutzen 23 und 24, die um ein Gelenk 27 verstellbar sind.

Eine Kalibrierhülse 20 weist ein Gelenk 21 auf, dem gegenüberliegend ein Schließmechanismus 22 vorgesehen ist, so daß diese Kalibrierhülse 20 aufgeklappt werden kann und damit über das Rohr gesetzt werden kann, um dann, nachdem es das Rohr umschließt, in die Kalibrierkammer 3 eingesetzt zu werden. Hierbei greifen die Greiferstutzen 23 und 24 in Aufnahmen 25 und 26 der Kalibrierhülse 20, öffnen die Kalibrierhülse 20 - Schwenkbewegung gemäß Pfeil F₅ - um das Gelenk 21, d. h. schwenken die beiden Teile der Kalibrierhülse 20 um das Gelenk 21, nachdem der Schließmechanismus entsprechend geöffnet ist und nachdem die Kalibrierhülse um das Rohr gesetzt ist, schließen die Greifstutzen 23 und 24 die Kalibrierhülse 20 wieder und der Schließmechanismus 22 verriegelt die Kalibrierhülse 20 in ihrer Arbeitsstellung.

Hierbei kann die Kalibrierhülse wie im Stand der Technik beispielsweise aus de WO 96/36475 ausgebildet sein, d. h. es sind geringfügige Verstellungen der die Kalibrierhülse bildenden Einzelsegmente möglich, so daß eine glatte Rohrinnenfläche in der Kalibrierhülse geschaffen wird und der Innenradius dieser Rohrinnenfläche der Kalibrierhülse 20 kann an geringfügige Wanddicken einstellbar sein.

In Fig. 2 verdeutlicht der Pfeil F₁ die mögliche Hubbewegung des eigentlichen Trägers 17, der Pfeil F₂ die Bewegung des Anschlußstückes 18 auf dem Träger 17, der Pfeil F₃ die mögliche Schwenkbewegung des Greifarmes 19 um seine Längsachse, der Pfeil F₄ die mögliche Schwenkbewegung des Anschlußstückes 18 um den Träger 17, so daß damit alle Positionen erreichbar sind, um die in der Kalibrierkammer 3 befindliche Kalibrierhülse 20 aus der Kalibrierkammer 3 zu entnehmen, diese Hülse in einem Vorratslager abzulegen, um dort eine neue Kalibrierhülse 20 zu ergreifen und diese wiederum über das Rohr 10 gesetzt in die Kalibrierkammer 3 einzuführen.

Die als Ausführungsbeispiel beschriebene Anlage kann natürlich auch eingesetzt werden, wenn eine Trennung des eigentlichen Rohres in dem Bereich zwischen der Vakuumkammer 2 und der Kalibrierkammer 3 erfolgen soll. Wenn das Rohr 10 durchtrennt wird, muß natürlich die Extrusionslinie stillgesetzt werden, während bei dem vorbeschriebenen Ausführungsbeispiel, bei welchem die Kalibrierhülse das Rohr 10 umgreifend eingesetzt wird, die Extrusionslinie im Schleichgang weitergefahren werden kann. Hier sind dann ggf. zusätzliche Kühleinrichtungen erforderlich, die das freiliegende Rohr im Bereich zwischen der Vakuumkammer 2 und der Kalibrierkammer 3 kühlen und damit ein zu weites Durchhängen des Rohres verhindern.

## Patentansprüche

1. Vorrichtung zur Herstellung von Kunststoffrohren mit einem Extruder, einem sich in Produktionsrichtung an den Extruder anschließenden Rohrkopf (1) und einer Kalibrierkammer (3), in der Kalibrierwerkzeuge an der Außenwandung des Rohres anliegen, wobei während der Produktionsphase der Massespalt des Rohrkopfes (1) verstellbar ist und sich an den Ausgang des Rohrkopfes eine auf die Außenseite des noch nicht ausgehärteten Rohres (10) wirkende Vakuum-Saugglocke (2) anschließt, durch die der Massestrangdurchmesser gesteuert verändert werden kann, während in der sich an die Vakuum-Saugglocke (2) anschließenden Kalibrierkammer (3) unterschiedliche Rohrdurchmesser erzielbar sind, **dadurch gekennzeichnet, dass** für die Zugänglichkeit der Kalibrierkammer (3) zum Einsetzen unterschiedlicher Kalibrierhülsen (20) die Kalibrierkammer (3) und ein sich anschließendes Vakuum-Kalibrierbad (4) verfahrbar gelagert sind, so dass eine Trennung der Extrusionslinie erfolgen kann,
und dass während des Betriebes der Extrusionslinie ohne Unterbrechung und Durchtrennung des extrudierten Rohres ein Wechseln der Kalibrierhülse in der Kalibrierkammer erfolgen kann und dazu geteilte Kalibrierhülsen eingesetzt werden, die das Rohr umgreifen,
wobei ein Greiferarm (19) zum Auswechseln der Kalibrierhülsen vorgesehen ist.

2. Vorrichtung nach Anspruch 1, **dadurch gekennzeichnet dass** der Greiferarm (19) in ihrem Abstand einstellbare Greifstutzen (23,24) aufweist, die in Aufnahmen (25,26) einer Kalibrierhülse (20) einsetzbar sind, wobei die Kalibrierhülse (20) um ein Gelenk (21) aufgeklappt werden kann.

3. Vorrichtung nach Anspruch 1 oder 2, **dadurch gekennzeichnet, dass** die klappbaren Teile der Kalibrierhülse (20) in ihrer Arbeitslage mit einem Schließmechanismus (22) verriegelbar sind.

4. Vorrichtung nach einem oder mehreren der vorhergehenden Ansprüche 1-3, **dadurch gekennzeichnet, dass** der Greifarm (19) von einer Hubanlage (15) mittels eines Anschluss-Stückes (18) getragen wird.

5. Vorrichtung nach Anspruch 4, **dadurch gekennzeichnet, dass** das Anschluss-Stück (18) auf der Hubanlage in Längsachse parallel zur Produktionslinie verfahrbar ist.

6. Vorrichtung nach einem oder mehreren der vorhergehenden Ansprüche 1-5, **dadurch gekennzeichnet, dass** die Hubanlage quer zur Längsachse der Extrusionslinie verfahrbar ist.

7. Vorrichtung nach einem oder mehreren der vorhergehen- den Ansprüche 1-6, **dadurch gekennzeichnet, dass** das Anschluss-Stück (18) um die Achse des Trägers (17) der Hubanlage (15) verschwenkbar ist (F4).

8. Vorrichtung nach einem oder mehreren der vorhergehenden Ansprüche 1-7, **dadurch gekennzeichnet, dass** der Greifarm (19) um seine Längsachse schwenkbar ist (F3).

9. Vorrichtung nach einem oder mehreren der vorhergehenden Ansprüche 1-8, **dadurch gekennzeichnet, dass** für jede Rohrdimension eine auszuwechseinde Kalibrierhülse (20) vorgesehen ist, mit der aber die Wandstärke des Rohres noch regulierbar ist.

## Claims

1. A device for producing plastic tubes with an extruder, a tube head (1) and a calibrating chamber (3) following the extruder in production direction, in which calibrating tools bear against the outer wall of the tube, wherein during the production phase the compound gap of the tube head (1) is adjustable and an outlet of the tube head is followed by a vacuum suction bell (2) acting on the outside of the not yet cured tube (10), through which the compound strand diameter can be changed in a controlled manner, while in the calibrating chamber (3) following the vacuum suction bell (2) different tube diameters can be achieved, **characterized in that** for the accessibility of the calibrating chamber (3) for inserting different calibrating sleeves (20) the calibrating chamber (3) and a following vacuum calibrating bath (4) are movably mounted so that a separation of the extrusion line can take place, and **in that** during the operation of the extrusion line a changing of the calibrating sleeve in the calibrating chamber can take place without interruption and severing of the extruded tube and to this end split calibrating sleeves are employed which engage about the tube, wherein a gripper arm (19) is provided for exchanging the calibrating sleeves.

2. The device according to Claim 1, **characterized in that** the gripper arm (19) comprises gripper pins (23, 24) adjustable regarding their spacing, which can be inserted into mounting holes (25, 26) of a calibrating sleeve (20), wherein the calibrating sleeve (20) can be folded open about a joint (21).

3. The device according to Claim 1 or 2, **characterized in that** the foldable parts of the calibrating sleeve (20) can be locked with a closing mechanism (22) in their working position.

4. The device according to any one or a plurality of the preceding Claims 1-3, **characterized in that** the gripper arm (19) is carried by a lift system (15) by means of a connecting piece (18).

5. The device according to Claim 4, **characterized in that** the connecting piece (18) can be moved on the lift system in longitudinal axis parallel to the production line.

6. The device according to any one or a plurality of the preceding Claims 1-5, **characterized in that** the lift system can be moved transversely to the longitudinal axis of the extrusion line.

7. The device according to any one or a plurality of the preceding Claims 1-6, **characterized in that** the connecting piece (18) can be pivoted (F4) about the axis of the support (17) of the lift system (15).

8. The device according to any one or a plurality of the preceding Claims 1-7, **characterized in that** the gripper arm (19) can be pivoted about its longitudinal axis (F3).

9. The device according to any one or a plurality of the preceding Claims 1-8, **characterized in that** for each tube dimension an exchangeable calibrating sleeve (20) is provided, but with which the wall thickness of the tube can still be regulated.

## Revendications

1. Dispositif pour la fabrication de tubes en matière plastique avec une extrudeuse, une tête de tube (1) en jonction avec l'extrudeuse dans le sens de la production et un compartiment de calibrage (3), dans lequel des outils de calibrage reposent contre la paroi extérieure du tube, moyennant quoi pendant la phase de production, l'interstice de matière de la tête de tube (1) est réglable et une cloche d'aspiration sous vide (2) agissant sur le côté extérieur du tube non encore durci étant en jonction avec la sortie de la tête de tube, grâce à laquelle le diamètre du boudin de matière peut être modifié par commande, alors que l'on peut obtenir dans le compartiment de calibrage (3) en jonction avec la cloche d'aspiration sous vide (2) différents diamètres de tube, **caractérisé en ce que**, pour l'accessibilité du compartiment de calibrage (3) pour la mise en place de différents manchons de calibrage (20), le compartiment de calibrage (3) et un bain de calibrage sous vide (4) en jonction avec sont logés de manière mobile, de sorte qu'une séparation de la ligne d'extrusion peut s'en suivre, et **en ce que** pendant le fonctionnement sans interruption de la ligne d'extrusion et le sectionnement du tube extrudé un changement du manchon de calibrage dans le compartiment de calibrage peut avoir lieu et des manchons de calibrage scindés étant utilisés à cet effet, lesquels entourent le tube, moyennant quoi l'on prévoit un bras de préhension (19) pour échanger les manchons de calibrage.

2. Dispositif selon la revendication 1, **caractérisé en ce que** le bras de préhension (19) présente des embouts de préhension (23, 24) réglables concernant leur espacement, lesquels peuvent être mis en place dans des logements (25, 26) d'un manchon de calibrage (20), le manchon de calibrage (20) pouvant être déplié autour d'une articulation (21).

3. Dispositif selon les revendications 1 ou 2, **caractérisé en ce que** les parties dépliables du manchon de calibrage (20) peuvent être verrouillées dans leur position de travail avec un mécanisme de fermeture (22).

4. Dispositif selon l'une ou plusieurs des revendications 1-3 précédentes, **caractérisé en ce que** le bras de préhension (19) est porté par une installation de levage (15) à l'aide d'une pièce de raccordement (18).

5. Dispositif selon la revendication 4, **caractérisé en ce que** la pièce de raccordement (18) sur l'installation de levage peut se déplacer selon l'axe longitudinal parallèlement à la ligne de production.

6. Dispositif selon l'une ou plusieurs des revendications 1-5 précédentes, **caractérisé en ce que** l'installation de levage peut se déplacer transversalement à l'axe longitudinal de la ligne d'extrusion.

7. Dispositif selon l'une ou plusieurs des revendications 1-6 précédentes, **caractérisé en ce que** la pièce de raccordement (18) peut pivoter (F4) autour de l'axe du support (17) de l'installation de levage (15).

8. Dispositif selon l'une ou plusieurs des revendications 1-7 précédentes, **caractérisé en ce que** le bras de préhension (19) peut pivoter (F3) autour de son axe longitudinal.

9. Dispositif selon l'une ou plusieurs des revendications 1-8 précédentes, **caractérisé en ce que** pour chaque dimension de tube on prévoit un manchon de calibrage à échanger, avec lequel l'épaisseur de paroi du tube peut cependant encore être réglée.
